# EUROPÄISCHE PATENTSCHRIFT

(11) **EP 3 126 418 B1**
(45) Veröffentlichungstag und Bekanntmachung des Hinweises auf die Patenterteilung: **20.12.2017**
(21) Anmeldenummer: 15714472.6
(22) Anmeldetag: 01.04.2015
(51) Int. Cl.: C08F 265/04, C08L 25/12, C08L 51/04, C08F 2/00

(54) **VERFAHREN ZUR HERSTELLUNG MECHANISCH VERBESSERTER THERMOPLASTISCHER FORMMASSEN**
PROCESS FOR PRODUCING THERMOPLASTIC MOULDING COMPOSITIONS WITH IMPROVED MECHANICAL PROPERTIES
PROCÉDÉ DE PRODUCTION DE MATIÈRES DE MOULAGE THERMOPLASTIQUES AMÉLIORÉES MÉCANIQUEMENT

(30) Priorität: 02.04.2014 EP 14163188
(43) Veröffentlichungstag der Anmeldung: 08.02.2017
(73) Patentinhaber: INEOS Styrolution Group GmbH, 60325 Frankfurt (DE)
(72) Erfinder: KOPPING, Jordan, 4123 Allschwill (CH); BÖCKMANN, Philipp, 67098 Bad Dürkheim (DE); NIESSNER, Norbert, 67159 Friedelsheim (DE); BEHRING, Lydia, 01445 Radebeul (DE)
(74) Vertreter: Jacobi, Markus Alexander
(86) Internationale Anmeldenummer: PCT/EP2015/057168
(87) Internationale Veröffentlichungsnummer: WO 2015/150450

(56) Entgegenhaltungen:
- EP-A1- 0 006 503
- EP-A2- 0 716 101
- DE-A1- 19 802 110
- US-A- 5 821 302

## Beschreibung

Die vorliegende Erfindung betrifft ein Verfahren zur Herstellung von thermoplastischen Formmassen, insbesondere von Formmassen auf Basis von Styrol-Copolymeren. Durch eine optimierte Prozessführung können über die Einsatzstoff-Zugabe mechanisch verbesserte thermoplastische Formmassen gewonnen werden. Diese enthalten mindestens eine Copolymer-Matrix (z.B. SAN-Copolymer) und mindestens ein Pfropfpolymer auf Basis eines Acrylat-Kautschuks. Die Erfindung betrifft auch thermoplastische Formteile sowie deren Verwendung. Die optimierte Prozessführung ergibt thermoplastische Formmassen mit verbesserter Kerbschlagzähigkeit.

Die Herstellung von Zusammensetzungen enthaltend eine Copolymer-Matrix und gepfropfte Kern-Schale-Polymere mittels polyfunktionaler Verbindungen wird in US 4,876, 313 beschrieben. Die Emulsionspolymerisation unter Einsatz von Vernetzern führt zu Pfropfkautschuken, welche sowohl in wässriger als auch in nicht-wässriger Lösung dauerhaft aneinander haften. Die Vernetzer können cyclisch oder nicht-cyclisch sein. Als ein bevorzugter nicht-cyclischer Vernetzer ist Alkyl(meth)acrylat (AMA) zu nennen, welcher in einer Menge von 1 bis 10 Gew.-% bei der Herstellung der Formmassen eingesetzt wird.

Schlagzähe, mehrphasige Emulsions-Copolymere vom ASA-Typ (Acrylnitril-Styrol-Acrylat) haben ein ausgewogenes Eigenschaftsprofil, wenn die Acrylester-Weichphase, z.B. basierend auf dem Monomer Butylacrylat, einen Vernetzer enthält. EP-A 0535456 beschreibt eine thermoplastische Formmasse mit verbesserter Schlagzähigkeit, enthaltend ein Styrol/Acrylnitril-Copolymer und ein mehrschaliges Pfropfcopolymer, wobei der Kern und die erste Pfropfhülle mit 0,1 bis 10 Gew.-% eines cyclischen Vernetzers, insbesondere Dicyclopentadienacrylat (DCPA), vernetzt sind.

Die Herstellung von Formmassen mit verminderter Lichtstreuung wird in US 2011/ 0275763 beschrieben. Hierbei werden Styrol-Acrylnitril-Copolymer-Formmassen mit mindestens einem Acryl-Kautschuk hergestellt. Die thermoplastische Zusammensetzung ist aus einer Hartkomponente (Matrix) und mindestens zwei unterschiedlichen Pfropfcopolymeren (Kautschuk-Komponenten) aufgebaut. Die Zusammensetzungen gemäß US 2011/0275762 weisen gute Kerbschlagzähigkeit und oftmals keinen sogenannten "Regenbogeneffekt" auf. DE 198 02 110 A1 beschreibt in Beispiel V1 die Herstellung eines ASA-Polymeren, wobei die Zugabe der Einsatzstoffe für die Pfropfgrundlage über zwei zeitliche Segmente erfolgt. Jedoch sind in DE 198 02 110 A1 weder Pfropfcopolymere mit einer mittleren Teilchengröße von 50 - 550 nm offenbart, noch werden Zusammensetzungen gelehrt, die ≥ 55 Gew.-% eines Copolymers A (z.B. SAN) enthalten. Für die Formmassen gibt es zahlreiche Verwendungen. So müssen Möbel für den Außenbereich und Bauteile für den Bau- oder Kraftfahrzeugsektor besonders hohen Anforderungen gerecht werden.
Die mechanischen Eigenschaften der im Stand der Technik bekannten thermoplastischen ASA-Formmassen können diese Anforderungen teilweise nicht erfüllen.

Eine Aufgabe dieser Erfindung ist es, verbesserte thermoplastische ASA-Formmassen durch eine Prozessoptimierung bei der Herstellung der Formmassen zu erhalten. Dies Verbesserung kann über eine gezielte Einsatzstoff-Zugabe erreicht werden.

Die vorliegende Erfindung betrifft insbesondere ein Verfahren zur Herstellung von thermoplastischen Formmassen enthaltend (oder bestehend aus):
a) 55 bis 85 Gew.-% mindestens eines Copolymers A,
   aufgebaut aus mindestens einem vinylaromatischem Monomer A1 sowie aus mindestens einem α,β-ungesättigte Monomer A2;
b) 15 bis 45 Gew.-% mindestens einem Pfropfcopolymeren B mit einer mittleren Teilchengröße von 50 bis 550 nm, aufgebaut aus (bezogen auf B):
   60 bis 80 Gew.-% mindestens einer kautschukartigen Pfropfgrundlage B1, bestehend aus:
      - B11:: 80 bis 99 Gew.-% mindestens eines C2-C8-Alkylacrylates,
      - B12:: 0,5 bis 2,5 Gew.-% des cyclischen Vernetzers Dicyclopentadienylacrylat,
      - B13:: 0 bis 2,0 Gew.-% eines nicht-cyklischen, mindestens zwei funktionelle Gruppen enthaltenden weiteren Vernetzers,
      - B14:: 0 bis 18 Gew-% eines weiteren copolymerisierbaren Monomers;
   20 bis 40 Gew.-% mindestens einer Pfropfhülle B2, bestehend aus:
      - B21:: 60 bis 75 Gew.-% eines ggf. substituierten Styrols,
      - B22:: 25 bis 40 Gew.-% Acrylnitril,
      - B23:: 0 bis 9 Gew.-% eines weiteren, copolymerisierbaren Monomeren;
c) 0 bis 10 Gew.-% an weiteren Hilfsstoffen und/oder Zusatzstoffen C;
wobei die Summe der Komponenten A bis C 100 Gew.-% der Formmasse ergibt,
wobei die Reaktionszeit der Polymerisation zur Herstellung der Pfropfgrundlage B1 in einem Bereich von 2 bis 5 h liegt und die Zugabe der Einsatzstoffe (insbesondere Monomere) über mindestens zwei zeitliche Segmente erfolgt.

Die vorliegende Erfindung betrifft auch ein Verfahren zur Herstellung von thermoplastischen ASA-Formmassen enthaltend (oder bestehend aus):
a) 55 bis 85 Gew.-% mindestens eines Copolymers A,
   aufgebaut aus Styrol Monomer A1 sowie aus Acrylnitril Monomer A2;
b) 15 bis 45 Gew.-% mindestens einem Pfropfcopolymeren B mit einer mittleren Teilchengröße von 50 bis 550 nm, aufgebaut aus (bezogen auf B):
   60 bis 80 Gew.-% mindestens einer kautschukartigen Pfropfgrundlage B1, bestehend aus:
      - B11:: 80 bis 99 Gew.-% mindestens eines C2-C4-Alkylacrylates,
      - B12:: 0,5 bis 2,5 Gew.-% des cyclischen Vernetzers Dicyclopentadienylacrylat,
      - B13:: 0 bis 2,0 Gew.-% eines nicht-cyklischen, mindestens zwei funktionelle Gruppen enthaltenden weiteren Vernetzers;
   20 bis 40 Gew.-% mindestens einer Pfropfhülle B2, bestehend aus:
      - B21:: 60 bis 75 Gew.-% Styrol,
      - B22:: 25 bis 40 Gew.-% Acrylnitril;
c) 0,5 bis 5 Gew.-% an weiteren Hilfsstoffen und/oder Zusatzstoffen C;
wobei die Summe der Komponenten A bis C 100 Gew.-% der Formmasse ergibt,
wobei die Reaktionszeit der Polymerisation zur Herstellung der Pfropfgrundlage B1 in einem Bereich von 2 bis 5 h liegt und die Zugabe der Einsatzstoffe (insbesondere Monomere) über mindestens drei zeitliche Segmente erfolgt.

Bei dem Verfahren zur Herstellung von thermoplastischen Formmassen können die Komponenten A bis C nach gängigen Verfahren vermischt werden. Der Art und Weise der Herstellung der Pfropfcopolymere B kommt jedoch besondere Bedeutung zu. Oftmals werden bei dem Verfahren zur Herstellung von thermoplastischen Formmassen mindestens ein Vernetzer B12 und mindestens ein Vernetzer B13 eingesetzt.

Gegenstand der Erfindung ist auch ein Verfahren zur Herstellung einer thermoplastischen Formmasse (insbesondere ASA-Formmasse), wobei zur Herstellung der Pfropfgrundlage B1 eine radikalisch initiierte Polymerisation in Emulsion erfolgt und die Zugabe der Einsatzstoffe (Monomere) B11 und B12 über mindestens zwei zeitliche Segmente erfolgt.

Gegenstand der Erfindung ist auch ein Verfahren zur Herstellung einer thermoplastischen Formmasse (insbesondere ASA-Formmasse), wobei für die Herstellung der Pfropfgrundlage B1 folgende Schritte erfolgen:
a) Initiation der Polymerisation von B11 (C2-C8-Alkylacrylat) in Gegenwart des cyclischen Vernetzers (B12),
b) Emulgieren des Gemisches aus a)
c) Reaktion der Pfropfgrundlage B1 mit mindestens einer Pfropfhülle B2,
d) Nach-Polymerisation des Gemisches aus c) und ggf. Filtration.

Gegenstand der Erfindung ist auch ein Verfahren zur Herstellung einer thermoplastischen Formmasse (insbesondere ASA-Formmasse), wobei 40 bis 95 Gew.-% der Komponente (B11) (C2-C8-Alkylacrylat) durch einen Initiator zur Reaktion gebracht werden, und im Anschluss die restlichen 5 bis 60 Gew.-% der Komponente (B11) und des cyclischen Vernetzers (B12) zugegeben wird. Der cyclische Vernetzer (B12) wird z.B. in einer Menge von 0,5 bis 2,5 Gew.%, oftmals von 1,2 bis 2,0 Gew.-%, bezogen auf die Menge des Alkylacrylats (z.B. nBA) eingesetzt.

Gegenstand der Erfindung ist auch ein Verfahren zur Herstellung einer thermoplastischen Formmasse (insbesondere ASA-Formmasse), wobei die Zugabe eines Monomeren-Gemischs aus B11 und B12 zur Herstellung von B1 in mindestens drei zeitlichen Segmenten erfolgt. Gegenstand der Erfindung ist auch ein Verfahren zur Herstellung einer thermoplastischen Formmasse, wobei der Zeitraum für jede der Segment-Zugaben in einem Bereich von 20 bis 60 min, insbesondere 20 bis 40 min liegt. Gegenstand der Erfindung ist auch ein Verfahren zur Herstellung einer thermoplastischen Formmasse, wobei als Komponente B12 Dicyclopentadienylacrylat (DCPA) in einer Menge von 1 bis 2 Gew.-%, bezogen auf Komponente B1, als Vernetzer eingesetzt wird.
Gegenstand der Erfindung ist auch ein Verfahren zur Herstellung einer thermoplastischen Formmasse (insbesondere ASA-Formmasse), bei dem Komponente A ein Copolymer aus Styrol (A11) und aus Acrylnitril (A12) ist, welches ein Molekulargewicht Mw im Bereich von 20.000 bis 300.000 g/Mol, oftmals von 50.000 bis 250.000 g/Mol aufweist. Die Erfindung betrifft auch eine thermoplastische Formmasse, insbesondere eine ASA-Formmasse, hergestellt nach einem Verfahren wie oben beschrieben.

Gegenstand der Erfindung ist auch die Verwendung der durch ein Verfahren gewonnenen thermoplastischen Formmasse (insbesondere ASA-Formmasse) für die Herstellung von Formkörpern, Folien, Fasern oder Beschichtungen. Gegenstand der Erfindung sind auch Formkörper, Folien, Fasern oder Beschichtungen, welche aus einer Formmasse, gewonnen durch ein Verfahren wie beschrieben, hergestellt werden.

In einer Ausführungsform der Erfindung wird die Pfropfgrundlage B1 der oben genannten thermoplastischen Formmasse unter Zugabe eines cyclischen Vernetzers, vorzugsweise Dicyclopentadien-acrylat (DCPA), hergestellt.

Gegenstand der Erfindung ist auch die Verwendung der über den optimierten Prozess hergestellten thermoplastischen Zusammensetzung zur Herstellung von Formkörpern, Folien, Fasern oder Beschichtungen für Außenanwendungen.

Ebenfalls betrifft die Erfindung Formkörper, Folien, Fasen oder Beschichtungen, enthaltend eine thermoplastische Zusammensetzung wie oben beschrieben, oder bestehend aus dieser Zusammensetzung. Durch die gezielte Zugabe einer bestimmten Menge an Vernetzer und der gezielten Einsatzstoff-Zugabe bei der Herstellung der ASA-Copolymere kann neben guten mechanischen Eigenschaften ein verbesserter Glanz sowie ein guter Gelbwert, auch nach längerer Bewitterung, realisiert werden, was insbesondere für Außenanwendungen, z. B. KFZ-Teile von Vorteil ist.

### Komponente A

Gemäß der Erfindung kann Copolymer A (Komponente A) in der Formmasse in einer Menge von 55 bis 85 Gew.-%, bevorzugt 65 bis 80 Gew.-%, bezogen auf die thermoplastische Formmasse, eingesetzt werden.

Komponente A ist dem Fachmann bekannt und kann über gängige Verfahren, zum Beispiel über radikalische Polymerisierung hergestellt werden. Als Komponente A können Styrolcopolymere eingesetzt werden, insbesondere SAN oder andere, kautschukfreie Styrolcopolymere. Beispiele für die Komponente A sind gängige Copolymer-Matrices wie zum Beispiel durch Massepolymerisation, Emulsions- oder Lösungsmittelpolymerisation hergestellte Styrol-Acrylnitril-Copolymere (SAN). Auch Mischungen von Matrices sind geeignet, beispielsweise die in Ulmann's Encyclopedia of Industrial Chemistry (VCH-Verlag, 5. Ausgabe, 1992, S. 633 f.) beschrieben.

Erfindungsgemäß wird Komponente A aus 60 bis 70 Gew.-%, bevorzugt 65 bis 70 Gew.-% aus Komponente A1 (Monomer A1) und 30 bis 40 Gew.-%, bevorzugt 30 bis 35 Gew.-% aus Komponente A2, bezogen auf das Gesamtgewicht von Komponente A, aufgebaut. Beispielsweise ist das Styrol:Acrylnitril Verhältnis von Komponente A 75:25. In einer weiteren bevorzugten Ausführungsform ist das Styrol:Acrylnitril Verhältnis von Komponente A 73:27.

Monomere der Komponente A1 können vinylaromatische Monomere, z. B. Styrol und Styrol-Derivate wie α-Methylstyrol und kernalkylierte Styrole, wie p-Methylstyrol und/oder tert.-Butylstyrol sein. Besonders bevorzugt werden Styrol und α-Methylstyrol eingesetzt.

Als Monomere der Komponente A2 (Monomer A2) werden α,β-ungesättigte Komponenten, vorzugsweise Acrylnitril und/oder Methacrylnitril eingesetzt, bevorzugt ist Acrylnitril.

In einer weiteren Ausführungsform der Erfindung wird eine Formmasse hergestellt, die eines oder mehrere Styrol-Copolymere A (Copolymer A) enthält, wobei dieses StyrolCopolymer A aus zwei oder drei Monomeren aus der Gruppe Styrol, Acrylnitril und/oder α-Methylstyrol aufgebaut ist.

Das Styrol-Copolymere A wird vorzugsweise aus den Komponenten Acrylnitril und Styrol und/oder α-Methylstyrol durch Massepolymerisation oder in Gegenwart eines oder mehrerer Lösungsmittel hergestellt. Bevorzugt sind dabei Copolymere A mit Molmassen M_{w} von 15.000 bis 500.000 g/Mol, bevorzugt 20.000 bis 300.000 g/mol, besonders bevorzugt 30.000 bis 250.000 g/Mol, wobei die Molmassen zum Beispiel durch Lichtstreuung in Tetrahydrofuran bestimmt werden können (GPC mit UV-Detektion).

Die Herstellung von Komponente A wird vorzugsweise mittels Substanzpolymerisation, Emulsionspolymerisation oder Lösungspolymerisation durchgeführt. Besonders bevorzugt wird die Polymerisation in 0 bis 20 Gew.-% aromatischen Lösemitteln, wie Toluol, Xylol oder Ethylbenzol durchgeführt. Näheres zu der Herstellung von Komponente A kann auch dem Kunststoff-Handbuch (Vieweg-Daumiller, Band V Polystyrol, Carl-Hanser-Verlag, München, 1969, Seite 124, Zeile 12 ff.) entnommen werden.

### Komponente B

Die Komponente B (Pfropfcopolymer B) wird in der Formmasse in Mengen von 15 bis 45 Gew.-%, bevorzugt 20 bis 35 Gew.-%, eingesetzt. Die Komponente B ist (mindestens) ein Pfropfcopolymer und enthält eine Pfropfgrundlage B1 und mindestens eine Pfropfhülle B2.

Die Pfropfgrundlage B1 wird in der Komponente B in Mengen von 50 bis 90 Gew.-%, vorzugsweise von 60 bis 80 Gew.-%, besonders bevorzugt in Mengen von 62 bis 78 Gew.-%, eingesetzt.

Als Monomere (B11) für die Herstellung der kautschukartigen Pfropfgrundlage (Propfbasis) B1 kommen im Allgemeinen (Meth)acrylsäurealkylester mit einem geradkettigen oder verzweigten Alkylrest mit 2 bis 8 Kohlenstoffatomen, bevorzugt 2 bis 4 Kohlenstoffatomen, in Betracht. Bevorzugt sind Acrylsäurealkylester mit einem geradkettigen oder verzweigten Alkylrest mit bevorzugt 2 bis 8 Kohlenstoffatomen, besonders bevorzugt 2 bis 4 Kohlenstoffatomen, insbesondere Acrylsäure-n-butylester. Die (Meth)acrylsäure-alkylester können bei der Herstellung der Pfropfgrundlage B1 einzeln oder in Mischung eingesetzt werden.

Weiterhin enthält die kautschukartige Pfropfgrundlage oftmals als Komponente mindestens einen cyclischen Vernetzer (B12) und gegebenenfalls einen nicht-cyclischen Vernetzer (B13). Beispielsweise werden 0,5 bis 2,5 Gew.-% des Acrylsäureesters des Tricyclodecenylalkohols (Dicyclopentadienylacrylat; DCPA) und 0 bis 2,0 Gew.-% Allylmethacrylat eingesetzt.

Darüber hinaus kann die kautschukartige Pfropfgrundlage B1 bis zu 18 Gew.-% an weiteren, copolymerisierbaren Monomeren (B14) enthalten. Oftmals sind jedoch keine weiteren Vernetzer (B14) vorhanden. Als geeignete Monomere (B14) kommen beispielsweise Divinylbenzol, Diallylmaleat, Diallylfumarat, Tri-Allylcyanurat und/oder Diallylphthalat in Betracht.

Die Pfropfhülle B1 wird in der Komponente B in Mengen von 10 bis 50 Gew.-%, vorzugsweise von 20 bis 40 Gew.-%, besonders bevorzugt in Mengen von 38 bis 22 Gew.-%, eingesetzt.

Zur Herstellung der mindestens einen Pfropfhülle B2 sind geeignete Monomere B21 vinylaromatische Monomere wie Styrol und/oder Styrol-Derivate, zum Beispiel Alkylstyrol, vorzugsweise α-Methylstyrol, und kernalkylierte Styrole, wie p-Methylstyrol und/oder tert.-Butylstyrol. Bevorzugt wird Styrol eingesetzt. Beispielsweise werden Monomere B21 in Mengen von 55 bis 80 Gew.-%, bevorzugt 60 bis 75 Gew.-%, besonders bevorzugt 58 bis 73 Gew.-%, bezogen auf die Pfropfhülle B2, eingesetzt.

Ein Beispiel für ein polares, copolymerisierbares ungesättigtes Monomer (B22) für die Pfropfhülle B2 ist Acrylnitril, aber auch Methacrylnitril ist einsetzbar. Beispielsweise werden Monomere B22 in Mengen von 20 bis 45 Gew.-%, bevorzugt 25 bis 40 Gew.-%, besonders bevorzugt 27 bis 38 Gew.-%, bezogen auf die Pfropfhülle B2 eingesetzt.

Als mögliche weitere copolymerisierbare Monomere (B23) können beispielsweise folgende Verbindungen Verwendung finden:
Acrylsäure, Methacrylsäure, Maleinsäureanhydrid, Methylmethacrylat, Ethylmethacrylat, Phenylmaleinimid, Acrylamid und Vinylmethylether.

Bevorzugt ist (B23) Methylmethacrylat und/oder Maleinsäureanhydrid. Beispielsweise werden Monomere B23 in Mengen von 0 bis 20 Gew.-%, bevorzugt 0 bis 9 Gew.-%, besonders bevorzugt 0 bis 7 Gew.-%, bezogen auf die Pfropfhülle B2 eingesetzt.

Die Herstellung von Pfropfcopolymeren aus einer elastomeren kautschukartigen Pfropfgrundlage B1 und einer Pfropfhülle B2 ist allgemein bekannt (DE 4006643 A1, Seite 2, Zeile 65 bis Seite 3, Zeile 43; DE 4131729 A1, Seite 3, Zeile 12 bis Seite 4, Zeile 49). Die Herstellung von grobteiligen Propfcopolymeren B kann durch Pfropfung in zwei Stufen erfolgen (DE-A 3227555, Komponente B: Seite 8, Zeile 14 bis Seite 10, Zeile 5 und DE-A 3149358, Seite 8, Zeile 14 bis Seite 10, Zeile 5).

Zur Herstellung der Pfropfcopolymere B wird im Allgemeinen zunächst das als Pfropfgrundlage dienende kautschukartige Acrylsäureester-Polymer B1 z.B. durch Emulsionspolymerisation hergestellt, indem man beispielsweise Alkylacrylat (B11) und den Vernetzer (B12) und gegebenenfalls (B13) und/oder (B14) beispielsweise in wässriger Emulsion in an sich bekannter Weise bei Temperaturen zwischen 20 und 100°C, vorzugsweise zwischen 50 und 80°C, oftmals zwischen 55 bis 70°C, polymerisiert.

Auf diesem dabei entstehenden Polyacrylsäureester-Kautschuk kann ein Gemisch von vinylaromatischen Monomeren (B21) mit einem polaren, copolymerisierbaren ungesättigten Monomeren (B22) sowie gegebenenfalls weiteren Monomeren (B23) aufgepfropft werden, wobei die Pfropfcopolymerisation vorzugsweise in wässriger Emulsion durchgeführt wird.

In einer bevorzugten Ausführung wird zur Herstellung der Pfropfcopolymere B 1,2 bis 2,0 Gew.-% DCPA, bezogen auf die Pfropfgrundlage (Pfropfbasis B1), eingesetzt. Besonders bevorzugt ist eine DCPA-Menge in dem Bereich von 1,3 bis 1,7 Gew.-%.

Die Zugabe des Monomeren-Gemischs zur Herstellung der Pfropfgrundlage B1 kann in einem oder oftmals in mehreren Schritten erfolgen. In einer bevorzugten Ausführung erfolgt die Zugabe des Monomerengemischs in mindestens 3 Schritten (zeitlichen Segmenten). In einem ersten Segment werden 1 bis 50 Gew.-% des Monomerengemischs von B1 zugegeben.

Bei einer gesamten Zulaufzeit des Monomeren-Gemischs zur Herstellung von B1 von 2 bis 4 h, bevorzugt 2 h 30 min bis 3 h 30 min, beträgt die Segmentdauer von 10 bis 60 min, bevorzugt 25 bis 45 min. Ferner kann die Segmentdauer im Prinzip auch innerhalb der Zulaufzeit variiert werden. Fahrweisen können sich ebenfalls in verschiedener Mengenzugabe unterscheiden.

Bei der Herstellung der Pfropfgrundlage B1 des Pfropfcopolymers B kann die Komponente B11, vorzugsweise C2-C8-Alkylacrylat, auf einmal mit dem Vernetzer oder 40 bis 99 Gew.-% der Komponente B11, bevorzugter Weise 60 bis 95 Gew.-%, vorgelegt werden.
Wird Komponente B11 vorgelegt kann eine Mischung der restlichen Komponenten für die Herstellung von B1 zugegeben werden. Bevorzugter Weise werden die restlichen Komponenten in einzelnen zeitlichen Segmenten zugegeben. Die Komponenten der Pfropfhülle B2 werden vorzugsweise separat bei einer Zulaufzeit von 2 bis 4 Stunden zugegeben.

Der erfindungsgemäße Herstellungsprozess des Pfropfcopolymeren B kann, je nach Verfahrensführung, sowohl zu kleinteiligen als auch großteiligen Pfropfcopolymere führen.

### Komponente C

Die Zusammensetzungen können Zusätze C, insbesondere Hilfs- und Zusatzstoffe enthalten. Bei der Polymerisation können die üblichen Hilfsstoffe in Mengen von 0 bis 10 Gew.-%, vorzugsweise 0 bis 8 Gew.-%, oftmals 0,5 bis 5 Gew.-%, bezogen auf die thermoplastische Formmasse, eingesetzt werden.

Zu nennen sind beispielsweise Emulgatoren, Polymerisationsinitiatoren, Puffersubstanzen, Molekulargewichtsregler, Weichmacher, Antistatika, Füllstoffe, Lichtschutzmittel, Gleitmittel, Treibmittel, Haftvermittler, gegebenenfalls weitere verträgliche thermoplastische Kunststoffe, Füllstoffe, oberflächenaktive Substanzen, Flammschutzmittel, Farbstoffe und Pigmente, Stabilisatoren gegen Oxidation, Hydrolyse, Licht (UV), Hitze oder Verfärbung und/oder Verstärkungsmittel.

Als Emulgatoren finden Alkalisalze von Alkyl- oder Alkylsulfonsäuren, Alkylsulfate, Fettalkoholsulfonate, Salze höherer Fettsäuren mit 10 bis 30 Kohlenstoffatomen, oder Harzseifen Verwendung. Als Polymerisationsinitiatoren können z.B. übliche Persulfate, beispielsweise Kaliumpersulfat oder bekannte Redox-Systeme eingesetzt werden.

Als Puffersubstanzen, durch welche pH-Werte von vorzugsweise 6 bis 9 eingestellt werden, kommen z.B. Natriumhydrogencarbonat und/oder Natriumpyrophosphat, und als Molekulargewichtsregler, beispielsweise Mercaptane, Terpinole und/oder dimeres o-Methylstyrol in Betracht. Die Molekulargewichtsregler werden ggf. in einer Menge von 0 bis 3 Gew.-%, bezogen auf das Gewicht der Reaktionsmischung, eingesetzt.

Auch Zusatzstoffe können z.-B. von 0 bis 10 Gew.-% eingesetzt werden. Als Lichtschutzmittel können alle üblichen Lichtschutzmittel eingesetzt werden, beispielsweise Verbindungen auf Basis von Benzophenon, Benztriazol, Zimtsäure, organischen Phosphiten und Phosphoniten sowie sterisch gehinderte Amine.

Gleitmittel können beispielsweise Kohlenwasserstoffe wie Öle, Paraffine, PE-Wachse, PP-Wachse, Fettalkohole mit 6 bis 20 Kohlenstoffatomen, Ketone, Carbonsäuren wie Fettsäuren, Montansäure oder oxidiertes PE-Wachs, Carbonsäureamide sowie Carbonsäureester, z.B. mit den Alkoholen, Ethanol, Fettalkoholen, Glycerin, Ethandiol, Pentaerythrit und langkettigen Carbonsäuren als Säurekomponente sein.

Als Stabilisatoren können übliche Antioxidantien, beispielsweise phenolische Antioxidantien, z.B. alkylierte Monophenole, Ester und/oder Amide der b-(3,5-di-tertierbutyl-4-hydroxyphenyl-propionsäure und/oder Benztriazole eingesetzt werden. Beispielhaft sind mögliche Antioxidantien in EP-A 698637 und EP-A 669367 erwähnt. Konkret kann man als phenolische Antioxidantien 2,6-Ditertierbutyl-4-methylphenol, Pentaerythrityl-tetrakis-[3-(3,5-ditertiärbutyl-4-hydroxyphenyl)-propionat und N,N'-Di-(3,5-ditertiärbutyl-4-hydroxyphenyl-propionyl)-hexamethylendiamin erwähnen. Die genannten Stabilisatoren können einzeln oder in Zusammensetzung verwendet werden.

Als weitere verträgliche thermoplastische Kunststoffe kommen beispielsweise Polyester (z.B. Polyethylenterephthalat, Polybutylenterephthalat), PMMA, Polycarbonat, Polyamid, Polyoxymethylen, Polystyrol, Polyethylen, Polypropylen, Polyvinylchlorid in Betracht.

Diese Hilfs- und/oder Zusatzstoffe können sowohl bereits bei der Herstellung der thermoplastischen Komponente A eingesetzt werden, als auch der Komponente A und/oder B bei der Herstellung der Zusammensetzung zugesetzt werden.

Zur Herstellung der erfindungsgemäßen thermoplastischen Zusammensetzung werden die vorbeschriebenen teilchenförmigen Pfropfpolymere B in die Copolymer A eingearbeitet. Die Einarbeitung kann zum Beispiel dadurch erfolgen, dass das bzw. die teilchenförmigen Pfropfpolymer(e) durch Zugabe eines Elektrolyten aus der Emulsion isoliert wird und anschließend, gegebenenfalls nach Trocknung, durch gemeinsames Extrudieren, Kneten oder Walzen mit der Hartkomponente vermischt wird. Bei der Herstellung dieser Mischung können auch die vorbeschriebenen Hilfs-/und oder Zusatzstoffe zugesetzt werden.

Gegenstand der Erfindung ist die Herstellung der thermoplastischen Copolymer-Zusammensetzungen durch Vermischen der oben genannten Komponenten und die Verwendungen von aus den erfindungsgemäßen Polymermischungen hergestellten Formteilen für Außenanwendungen.

Weiterer Gegenstand der Erfindung sind Formteile hergestellt aus dem Herstellungsprozess zu den erfindungsgemäßen Polymer-Zusammensetzungen.
Die erfindungsgemäßen Polymerzusammensetzungen können beispielsweise pelletiert oder granuliert, oder nach allgemein bekannten Verfahren, beispielsweise durch Extrusion, Spritzguss, Blasformen oder Kalandierung zu Formteilen aller Art wie Kabelummantelungen, Folien, Schläuchen, Fasern, Profilen, Schuhschalen, Schuhsohlen, technischen Formteilen (wie KFZ-Teilen); Gebrauchsartikeln, Möbel im Innen- und Außenbereich, Beschichtungen, Faltenbalgen und/oder Tierohrmarken verarbeitet werden.

Die aus dem erfindungsgemäßen Herstellungsprozess erhaltenen thermoplastischen Formmassen zeichnen sich insbesondere durch verbesserte mechanische Eigenschaften (wie Kerbschlagzähigeit) in den Formteilen aus. Die über das optimierte Herstellungsverfahren erhaltenen thermoplastischen Formmassen finden daher insbesondere Verwendung bei der Herstellung von Formkörpern, Formteilen, Folien und Fasern, wobei beispielsweise die Formteile im Bausektor oder als Kraftfahrzeug-Bauteile eingesetzt werden können. Die Vorteile der verbesserten mechanischen Eigenschaften sollen anhand der folgenden Beispiele dargestellt werden.

Die Erfindung wird durch die Beispiele und die Ansprüche näher erläutert.

### Methoden:

Für die Bestimmung des Quellungsindexes und des Gelgehalts wurden 7 g Dispersion und 7 g Wasser gemischt und der entstehende Film über Nacht im Trockenschrank bei etwa 700 mbar und 70°C unter Stickstoffstrom getrocknet. Anschließend wurden 2 g Polymerfilm mit 40 ml Toluol versetzt. Nachdem der Film über Nacht gequollen war, wurde das Toluol entfernt. Der gequollene Film wurde gewogen und dann über Nacht unter Vakuum getrocknet. Der getrocknete Film wurde gewogen und Gelgehalt und Quellungsindex wurden berechnet.

Zur Abtrennung der löslichen Anteile wurden 2,5 g mit 500 ml Aceton versetzt und zwei Tage lang gequollen. Die Suspension wurde über Kieselgur abfiltriert, mit Aceton gewaschen und getrocknet. Das Filtrat wurde im Vakuum entfernt.

Der Feststoffgehalt wurde mit dem handelsüblichen Gerät "Halogen Moisture Analyzer" (HR73 der Firma METTLER TOLEDO) bestimmt.

Die Kautschukproben (Propfcopolymere) für die GPC und GPEC wurden über Nacht in THF gequollen und vor der Messung filtriert. Die GPC wird nach dem Größenausschlussprinzip durchgeführt. In ein Säulensystem mit einer Vor- und zwei Trennsäulen wurden 100 µl initiiert.
Als Elutionsmittel wurde THF verwendet; die Durchflussgeschwindigkeit betrug 1 ml/min bei 35°C. Als Detektor wurden ein UV-Detektor und ein Differential Refraktometer (DRI) verwendet.

Bei der GPEC arbeitet man nach dem Prinzip der Fällungschromatographie. Mit einem Gemisch aus Acetonitril und THF in variierender Zusammensetzung als Elutionsmittel wurde ein Lösungsmittelgradient erzeugt. Bei 80°C und einer Durchflussgeschwindigkeit von 5 ml/min wurden 20 µl initiiert. Als Detektor wurde ein handelsüblicher "Evaporative Light Scattering Detector" (Varian ELSD 2100) verwendet.

Zur Herstellung der Mischungen der Komponenten wurden die jeweiligen Komponenten in einem handelsüblichen Extruder (ZSK 30 Doppelschneckenextruder der Fa. Werner & Pfleiderer) bei einer Temperatur von 240°C innig vermischt.

### Charpy-Kerbschlagzähigkeit [kJ/m²]:

Die Kerbschlagzähigkeit wird ermittelt an Probekörpern (80 x 10 x 4 mm, hergestellt durch Spritzguss bei einer Massetemperatur von 240°C und einer Werkzeugtemperatur von 70°C), bei 23°C nach ISO 179-1A (von 2010).

### Fließfähigkeit (MVR [ml/10 min]):

Die Fließfähigkeit wird ermittelt an einer Polymerschmelze bei 220°C und 10 kg Belastung nach ISO 1133 (von 2011).

### Vicat-Erweichungstemperatur (°C):

Die Erweichungstemperatur wird nach ISO 306: 2004 ermittelt.

Die Probekörper für die Mechanik-Prüfungen und die TEM-Aufnahmen wurden im Spritzgussverfahren angefertigt.

### Allgemeine Versuchsdurchführung (Beispiele 1 bis 8)

Herstellung der Polymer-Komponente B über radikalisch initiierte Polymerisation in Emulsion.

Entionisiertes Wasser, Natriumhydrogencarbonat und Emulgator K 30 werden vorgelegt und der Kolben wird auf 59°C aufgeheizt. Anschließend wird ein Gemisch aus n-Butylacrylat (nBA) und DCPA in den Vorratsgefäßen der Dosiereinheit vorgelegt.

Bei zeitlich variierender Vernetzer-Zugabe wird der Großteil des nBA in einem separaten Gefäß vorgelegt. Nach Zugabe des Initiators Kaliumperoxodisulfat wird das Monomerengemisch nach dem festgelegten Programm automatisch zugegeben, im Anschluss auf 61 °C hochgeheizt und eine Stunde nachpolymerisiert. Anschließend wird auf Raumtemperatur abgekühlt und damit die Synthese der Grundstufe beendet. Im Anschluss werden Wasser und Emulgator K 30 zugegeben.

Darauf wird das Gemisch auf 61°C erhitzt. Nach Vorlegen des Monomeren-Gemisches aus Styrol und Acrylnitril in den Vorratsgefäßen der Dosiereinheit wird Kaliumperoxodisulfat in Wasser gelöst und zum Reaktionsgemisch gegeben. Die Monomere der Pfropfstufe werden automatisch nach dem vorgegebenen Programm zudosiert.

Abschließend wird bei 65°C eine Stunde nachpolymerisiert. Nach Abkühlen auf Raumtemperatur ist die Synthese der Pfropfstufe beendet und eine Probe wird entnommen. Das Reaktionsgemisch wird abgefüllt, wobei eventuell angefallenes Koagulat abfiltriert wird. Der erhaltene Kautschuk wird im Fällungs-Kessel gefällt. Man erhält den Feuchtkautschuk, der noch einen Wassergehalt von etwa 30 % aufweist.

Bei einer gesamten Zulaufzeit des Monomeren-Gemischs zur Herstellung von B1 von 2 bis 4 h, oft 2 h 30 min bis 3 h 30 min, beträgt die Segmentdauer von 10 bis 60 min, oft 25 bis 45 min.

Die genauen Massenangaben der Einsatzstoffe für die Synthese sind für die verschiedenen DCPA-Anteile in der folgenden Tabelle 1 aufgeführt.

**Tabelle 1 - Die Beispiele 1 bis 8 unterscheiden sich im DCPA-Gehalt und in der Zulaufart. Wenn nicht anders gekennzeichnet, sind die eingesetzten Stoffmengen in g angegeben.**

| | Beispiel | 1 | 2 | 3 | 4 | 5 | 6 | 7 | 8 |
|---|---|---|---|---|---|---|---|---|---|
| | DCPA in % bezogen auf nBA | 1,20 | 1,30 | 1,40 | 1,50 | 1,60 | 1,70 | 1,80 | 2,00 |
| Vorlage | Wasser | 2807,28 | 2807,28 | 2807,28 | 2807,28 | 2807,28 | 2807,28 | 2807,28 | 2807,28 |
| | K₂(SO₄)₂ | 5,67 | 5,67 | 5,67 | 5,67 | 5,67 | 5,67 | 5,67 | 5,67 |
| | NaHCO₃ | 7,25 | 7,25 | 7,25 | 7,25 | 7,25 | 7,25 | 7,25 | 7,25 |
| | Emulgator K30 | 47,25 | 47,25 | 47,25 | 47,25 | 47,25 | 47,25 | 47,25 | 47,25 |
| Zulauf 1 Teilmenge 1 | nBA | 0,00 | 1500,03 | 0,00 | 1500,03 | 0,00 | 1500,03 | 0,00 | 0,00 |
| Zulauf 1 Teilmenge 2 | nBA DCPA | 1867,32 22,68 | 365,40 24,57 | 1863,54 26,46 | 361,62 28,35 | 1859,76 30,24 | 357,84 32,13 | 1855,98 34,02 | 1852,20 37,80 |
| Zugabe 1 | Wasser | 2869,65 | 2869,65 | 2869,65 | 2869,65 | 2869,65 | 2869,65 | 2869,65 | 2869,65 |
| | Emulgator K30 | 8,66 | 8,66 | 8,66 | 8,66 | 8,66 | 8,66 | 8,66 | 8,66 |
| Zugabe 2 | Wasser | 100,17 | 100,17 | 100,17 | 100,17 | 100,17 | 100,17 | 100,17 | 100,17 |
| | K₂(SO₄)₂ | 5,04 | 5,04 | 5,04 | 5,04 | 5,04 | 5,04 | 5,04 | 5,04 |
| Zulauf 2 | Styrol Acrylnitril | 945,00 315,00 | 945,00 315,00 | 945,00 315,00 | 945,00 315,00 | 945,00 315,00 | 945,00 315,00 | 945,00 315,00 | 945,00 315,00 |

Der erhaltene Feuchtkautschuk wird im Extruder zunächst zum Konzentrat (50 % Kautschukgehalt) und schließlich zur fertigen Abmischung (30 % Kautschukgehalt) weiter verarbeitet und die mechanischen Eigenschaften des erhaltenen Produktes werden getestet.

### Experiment 1

Im ersten Teilversuch wird die DCPA-Konzentration im nBA/DCPA-Monomerengemisch schrittweise variiert. Es werden Kautschuke mit DCPA-Konzentrationen von 1,2 %, 1,4 %, 1,5 %, 1,8 % und 2,0 % (bezogen auf nBA) hergestellt.

Die mechanischen Eigenschaften der verschiedenen SAN-Pfropfcopolymer-Zusammensetzungen (SAN-Matrix mit Styrol : Acrylnitril = 65 : 35, M_{w}=160.000 g/mol) sind in Tabelle 2 gezeigt.

**Tabelle 2 - Zusammensetzungen aus erfindungsgemäßem Kautschuk mit SAN und mechanische Messwerte der Formteile**

| Beispiel | | 1 | 3 | 4 | 5 | 7 | 8 |
|---|---|---|---|---|---|---|---|
| DCPA in % bezogen auf nBA | | 1,20 | 1,40 | 1,50 | 1,60 | 1,80 | 2,00 |
| Kautschukgehalt in % | | 33,1 | 32,5 | 32,9 | 33,1 | 32,3 | 32,8 |
| Charpy | | | | | | | |
| kJ/m² | (23°C) | 4,71 | 6,85 | 3,19 | 4,96 | 4,42 | 6,43 |
| kJ/m² | (0°C) | 4,05 | 4,27 | 2,87 | 3,65 | 3,50 | 4,40 |
| kJ/m² | (0-23°C) | 2,32 | 1,51 | 2,13 | 2,47 | 2,12 | 2,09 |
| MVR | ml/10min | 58,7 | 55,6 | 55,9 | 51,3 | 53,6 | 50,5 |
| Vicat | °C | 97,8 | 97,1 | 97,5 | 97,8 | 98,2 | 98,0 |
| Quellungsindex | | 24,10 | 21,03 | 18,15 | 17,93 | 15,77 | 17,45 |

### Experiment 2

Es wird das Programm für die Zu-Dosierung des Monomeren-Gemisches (zeitliche Segmente) variiert. Dabei wird der Großteil des nBA konstant zudosiert und ein kleiner Teil mit dem DCPA vermischt und nach dem variablen Programm zugegeben. Es wird mit 1,5 % DCPA in Bezug auf das Monomerengemisch gearbeitet. Die Zugabe erfolgt wie in Tabelle 3 aufgelistet. Die mechanischen Eigenschaften der SAN-enthaltenden Formmassen (als Formteile) sind in Tabelle 4 gezeigt.

**Tabelle 3**

| Segmentnr. | 1 | 2 | 3 | 4 | 5 |
|---|---|---|---|---|---|
| Segmentdauer in min | 40 | 40 | 40 | 40 | 40 |

| Versuch | Zugabe Monomerengemisch in Gew.-% | | | | |
|---|---|---|---|---|---|
| A | 50 | 25 | 20 | 5 | 0 |
| B | 40 | 40 | 10 | 10 | 0 |
| C | 30 | 30 | 20 | 10 | 10 |
| D | 30 | 20 | 0 | 20 | 30 |
| E | 40 | 15 | 10 | 15 | 20 |
| F | 5 | 25 | 40 | 25 | 5 |
| G | 35 | 25 | 10 | 0 | 30 |
| H | 35 | 35 | 10 | 0 | 20 |

Die Versuche (unterschiedliche Fahrweisen a - h) unterscheiden sich in der Menge der Zugabe, sowie der Anzahl der zeitlichen Segmente, des Monomeren-Gemisches.

**Tabelle 4 - Charpy, MVR, Vicat und Quellindex in Abhängigkeit der verschiedenen Fahrweisen mit 1,5 % DCPA (bezogen auf nBA). Als Vergleich dienen Formmassen mit kontinuierlichem Zulauf (1,5 % und 2,0 % DCPA).**

| | | | Charpy | | | MRV | Vicat | Quellungsindex |
|---|---|---|---|---|---|---|---|---|
| | | DCPA in % bezogen auf nBA | kJ/m² (23°C) | kJ/m² (0°C) | kJ/m² (0-23°C) | ml/10 min | °C | |
| Fahrweisen | A | 1,5 | 3,22 | 2,90 | 2,11 | 56,0 | 98,2 | 13,69 |
| | B | 1,5 | 5,64 | 3,76 | 2,00 | 52,8 | 98,3 | 12,41 |
| | C | 1,5 | 3,58 | 3,47 | 1,92 | 54,9 | 82,2 | 12,89 |
| | D | 1,5 | 6,90 | 3,55 | 2,28 | 50,8 | 98,1 | 12,30 |
| | E | 1,5 | 5,76 | 4,21 | 4,26 | 48,9 | 97,5 | 13,43 |
| | F | 1,5 | 5,08 | 4,23 | 2,26 | 52,8 | 98,2 | 15,13 |
| | G | 1,5 | 3,58 | 3,55 | 1,56 | 52,7 | 100,8 | 13,48 |
| | H | 1,5 | 3,43 | 2,89 | 1,87 | 46,1 | 101,6 | 14,81 |
| | Va | 1,5 | 3,19 | 2,87 | 2,13 | 55,9 | 97,5 | 18,15 |
| | Vb | 2,0 | 6,43 | 4,40 | 2,09 | 50,5 | 98,0 | 17,45 |

Für Fahrweise D mit dem niedrigsten Quellungsindex wurden weitere Versuche mit DCPA-Konzentrationen von 1,3 % und 1,7 % durchgeführt. Aus Tabelle 5 wird ersichtlich, dass die Formmasse nach Fahrweise d besonders ausgewogene mechanische Eigenschaften besitzt.

Besonders mit einem DCPA-Gehalt von 1,3 %, bezogen auf nBA, weist die ASA-Formmasse günstige mechanische Eigenschaften und einen niedrigen Quellungsindex auf.

**Tabelle 5 zeigt die Werte für Charpy, MVR, Vicat und Quellindex in Abhängigkeit der Fahrweisen b und d mit 1,3 %; 1,5 % und 1,7 % des Vernetzers DCPA.**

| | | Fahrweise D | | |
|---|---|---|---|---|
| | DCPA in % bezogen auf nBA | 1,3 | 1,5 | 1,7 |
| Charpy | | | | |
| kJ/m² | (23°C) | 6,70 | 6,90 | 5,70 |
| kJ/m² | (0°C) | 4,40 | 3,55 | 3,84 |
| kJ/m² | (0-23°C) | 2,31 | 2,28 | 2,16 |
| MVR | ml/10min | 60,7 | 50,8 | 57,5 |
| Vicat | °C | 98,1 | 98,1 | 98,5 |
| Quellungsindex | | 11,24 | 12,30 | 13,05 |

Mit einem deutlich geringeren Quellungsindex und besserer Wärmeformbeständigkeit, einer ausgewogenen Kerbschlagzähigkeit sowie Fließverhalten liefert das erfindungsgemäße Verfahren mechanisch verbesserte thermoplastische Formmassen.

### Experiment 3

Die Zulaufzeit wird bei einem konstanten Vernetzer-Gehalt von 1,5 % DCPA (bezogen auf nBA) variiert. Das Monomerengemisch wird kontinuierlich über 3 h 30 min oder über 3 h oder über 2 h 30 min zugegeben. Es sind keine mechanischen Verbesserungen gegenüber der Fahrweisen mit unterschiedlichen Segmenten zu beobachten.

## Patentansprüche

1. Verfahren zur Herstellung einer thermoplastischen Formmasse, enthaltend:
a) 55 bis 85 Gew.-% mindestens eines Copolymers A, aufgebaut aus mindestens einem vinylaromatischen Monomer A1 sowie aus mindestens einem α,β-ungesättigten Monomer A2;
b) 15 bis 45 Gew.-% mindestens einem Pfropfcopolymeren B mit einer mittleren Teilchengröße von 50 bis 550 nm, aufgebaut aus:
60 bis 80 Gew.-% mindestens einer kautschukartigen Pfropfgrundlage B1, bestehend aus:
B11: 80-99 Gew.-% mindestens eines C2-C8-Alkylacrylates,
B12: 0,5 bis 2,5 Gew.-% des cyclischen Vernetzers Dicyclopentadienylacrylat,
B13: 0 bis 2,0 Gew.-% eines nicht-cyklischen, mindestens zwei funktionelle Gruppen enthaltenden weiteren Vernetzers,
B14: 0 bis 18 Gew.-% eines weiteren copolymerisierbaren Monomeren;
20 bis 40 Gew.-% mindestens einer Pfropfhülle B2, bestehend aus:
B21: 60 bis 75 Gew.-% eines ggf. substituierten Styrols,
B22: 25 bis 40 Gew.-% Acrylnitril,
B23: 0 bis 9 Gew.-% eines weiteren, copolymerisierbaren Monomeren;
c) 0 bis 10 Gew.-% an weiteren Hilfsstoffen und/oder Zusatzstoffen C;
wobei die Summe der Komponenten A bis C 100 Gew.-% der Formmasse ergibt, wobei die Reaktionszeit der Polymerisation zur Herstellung der Pfropfgrundlage B1 in einem Bereich von 2 bis 5 h liegt und die Zugabe der Einsatzstoffe über mindestens zwei zeitliche Segmente erfolgt.

2. Verfahren zur Herstellung einer thermoplastischen Formmasse gemäß Anspruch 1, wobei zur Herstellung der Pfropfgrundlage B1 eine radikalisch initiierte Poly merisation in Emulsion erfolgt und die Zugabe der Einsatzstoffe B11 und B12 über mindestens zwei zeitliche Segmente erfolgt.

3. Verfahren zur Herstellung einer thermoplastischen Formmasse gemäß einem der Ansprüche 1 oder 2, wobei für die Herstellung der Pfropfgrundlage B1 folgende Schritte erfolgen:
a) Initiation der Polymerisation von B11 (C2-C8-Alkylacrylat) in Gegenwart des cyclischen Vernetzers (B12),
b) Emulgieren des Gemisches aus a)
c) Reaktion der Pfropfgrundlage B1 mit mindestens einer Pfropfhülle B2,
d) Nachpolymerisation des Gemisches aus c) und ggf. Filtration.

4. Verfahren zur Herstellung einer thermoplastischen Formmasse gemäß einem der Ansprüche 1 bis 3, wobei 40 bis 95 Gew.-% der Komponente (B11) (C2-C8-Alkylacrylat) durch einen Initiator zur Reaktion gebracht werden, und im Anschluss die restlichen 5 bis 60 Gew.-% der Komponente (B11) und des cyclischen Vernetzers (B12) zugegeben wird.

5. Verfahren zur Herstellung einer thermoplastischen Formmasse gemäß einem der Ansprüche 1 bis 4, wobei die Zugabe eines Monomeren-Gemischs aus B11 und B12 zur Herstellung von B1 in mindestens drei zeitlichen Segmenten erfolgt.

6. Verfahren zur Herstellung einer thermoplastischen Formmasse gemäß einem der Ansprüche 1 bis 5, **dadurch gekennzeichnet, dass** der Zeitraum für jede der Segment-Zugaben in einem Bereich von 20 bis 60 min, insbesondere 20 bis 40 min liegt.

7. Verfahren zur Herstellung einer thermoplastischen Formmasse gemäß einem der Ansprüche 1 bis 6, **dadurch gekennzeichnet, dass** als Komponente B12 Dicyclopentadienylacrylat (DCPA) in einer Menge von 1 bis 2 Gew.-%, bezogen auf Komponente B1, als Vernetzer eingesetzt wird.

8. Verfahren zur Herstellung einer thermoplastischen Formmasse gemäß einem der Ansprüche 1 bis 7, **dadurch gekennzeichnet, dass** Komponente A ein Copolymer aus Styrol (A11) und aus Acrylnitril (A12) ist, welches ein Molekulargewicht Mw im Bereich von 20.000 bis 300.000 g/Mol aufweist.

9. Verfahren zur Herstellung einer thermoplastischen Formmasse gemäß einem der Ansprüche 1 bis 8, **dadurch gekennzeichnet, dass** die Komponenten A und B mit 0,5 bis 5 Gew.-% an weiteren Hilfsstoffen und/oder Zusatzstoffen C vermischt werden.

10. Thermoplastische Formmasse, hergestellt nach einem Verfahren gemäß einem der Ansprüche 1 bis 9.

11. Verwendung der durch ein Verfahren gemäß einem der Ansprüche 1 bis 9 gewonnenen thermoplastischen Formmasse für die Herstellung von Formkörpern, Folien, Fasern oder Beschichtungen.

12. Formkörper, Folien, Fasern oder Beschichtungen, welche aus einer Formmasse, gewonnen durch ein Verfahren gemäß einem der Ansprüche 1 bis 9, hergestellt werden.

## Claims

1. A process for the production of a thermoplastic molding composition comprising:
a) from 55 to 85% by weight of at least one copolymer A composed of at least one vinylaromatic monomer A1, and also of at least one α,β-unsaturated monomer A2;
b) from 15 to 45% by weight of at least one graft copolymer B with average particle size from 50 to 550 nm, composed of:
from 60 to 80% by weight of at least one rubbery graft base B1 consisting of:
B11: from 80 to 99% by weight of at least one C2-C8-alkyl acrylate,
B12: from 0.5 to 2.5% by weight of the cyclic crosslinking agent dicyclopentadienyl acrylate,
B13: from 0 to 2.0% by weight of another, noncyclic crosslinking agent comprising at least two functional groups,
B14: from 0 to 18% by weight of another copolymerizable monomer;
and from 20 to 40% by weight of at least one graft shell B2 consisting of:
B21: from 60 to 75% by weight of an optionally substituted styrene,
B22: from 25 to 40% by weight of acrylonitrile,
B23: from 0 to 9% by weight of another copolymerizable monomer;
c) from 0 to 10% by weight of other auxiliaries and/or additives C;
where the entirety of components A to C provides 100% by weight of the molding composition, and where the reaction time of the polymerization for the production of the graft base B1 is in the range from 2 to 5 h and addition of the starting materials takes place across at least two chronological segments.

2. The process for the production of a thermoplastic molding composition as claimed in claim 1, where the production of the graft base B1 is achieved by carrying out a free-radical-initiated polymerization in emulsion and addition of the starting materials B11 and B12 takes place across at least two chronological segments.

3. The process for the production of a thermoplastic molding composition as claimed in claim 1 or 2, where production of the graft base B1 is achieved by using the following steps:
a) initiation of the polymerization of B11 (C2-C8-alkyl acrylate) in the presence of the cyclic crosslinking agent (B12),
b) emulsification of the mixture from a),
c) reaction of the graft base B1 with at least one graft shell B2,
d) continued polymerization of the mixture from c) and optionally filtration.

4. The process for the production of a thermoplastic molding composition as claimed in any of claims 1 to 3, where from 40 to 95% by weight of component (B11) (C2-C8-alkyl acrylate) are caused to react by an initiator, and then the remaining from 5 to 60% by weight of component (B11) and of the cyclic crosslinking agent (B12) is added.

5. The process for the production of a thermoplastic molding composition as claimed in any of claims 1 to 4, where addition of a monomer mixture made of B11 and B12 for the production of B1 takes place in at least three chronological segments.

6. The process for the production of a thermoplastic molding composition as claimed in any of claims 1 to 5, **characterized in that** the time for each of the segment additions is in the range from 20 to 60 min, in particular from 20 to 40 min.

7. The process for the production of a thermoplastic molding composition as claimed in any of claims 1 to 6, **characterized in that** a quantity of from 1 to 2% by weight, based on component B1, of dicyclopentadienyl acrylate (DCPA) is used as crosslinker component B12.

8. The process for the production of a thermoplastic molding composition as claimed in any of claims 1 to 7, **characterized in that** component A is a copolymer of styrene (A11) and of acrylonitrile (A12) with molecular weight Mw in the range from 20 000 to 300 000 g/mol.

9. The process for the production of a thermoplastic molding composition as claimed in any of claims 1 to 8, **characterized in that** components A and B are mixed with from 0.5 to 5% by weight of other auxiliaries and/or additives C.

10. A thermoplastic molding composition produced by a process as claimed in any of claims 1 to 9.

11. The use, for the production of moldings, films, fibers, or coatings, of the thermoplastic molding composition obtained by a process as claimed in any of claims 1 to 9.

12. A molding, film, fiber, or coating which is produced from a molding composition obtained by a process as claimed in any of claims 1 to 9.

## Revendications

1. Procédé de préparation d'un mélange à mouler thermoplastique, contenant :
a) 55 à 85 % en poids d'au moins un copolymère A constitué à partir d'au moins un monomère vinylaromatique A1 ainsi que d'au moins un monomère α,β-insaturé A2 ;
b) 15 à 45 % en poids d'au moins un copolymère greffé B présentant une granulométrie moyenne de 50 à 550 nm, constitué de :
60 à 80 % en poids d'au moins une base de greffage de type caoutchouc B1, constitué de :
B11 : 80 à 99 % en poids d'au moins un acrylate d'alkyle en C2-C8,
B12 : 0,5 à 2,5 % en poids de l'agent de réticulation cyclique acrylate de dicyclopentadiényle,
B13 : 0 à 2,0 % en poids d'un agent de réticulation supplémentaire, non cyclique, contenant au moins deux groupes fonctionnels,
B14 : 0 à 18 % en poids d'un monomère copolymérisable supplémentaire ;
20 à 40 % en poids d'au moins une enveloppe de greffage B2, constituée de :
B21 : 60 à 75 % en poids d'un styrène éventuellement substitué,
B22 : 25 à 40 % en poids d'acrylonitrile,
B23 : 0 à 9 % en poids d'un monomère copolymérisable supplémentaire ;
c) 0 à 10 % en poids d'adjuvants et/ou d'additifs supplémentaires C ;
la somme des composants A à C représentant 100 % en poids du mélange à mouler, le temps de réaction de la polymérisation, pour la fabrication de la base de greffage B1, étant compris dans la plage de 2 à 5 h, et l'addition des matières de charge s'effectuant sur au moins deux segments temporels.

2. Procédé de fabrication d'un mélange à mouler thermoplastique selon la revendication 1, dans lequel on procède, pour la fabrication de la base de greffage B1, à une polymérisation à amorçage radicalaire en émulsion, et l'addition des matières de charge B11 à B12 est effectuée sur au moins deux segments temporels.

3. Procédé de fabrication d'un mélange à mouler thermoplastique selon l'une des revendications 1 ou 2, dans lequel on procède, pour la fabrication de la base de greffage B1, aux étapes suivantes :
a) amorçage de la polymérisation de B11 (acrylate d'alkyle en C2-C8) en présence de l'agent de réticulation cyclique (B12),
b) émulsification du mélange obtenu en a),
c) réaction de la base de greffage B1 avec au moins une enveloppe de greffage B2,
d) post-polymérisation du mélange obtenu en c), et éventuellement filtration.

4. Procédé de fabrication d'un mélange à mouler thermoplastique selon l'une des revendications 1 à 3, dans lequel 40 à 95 % en poids du composant (B11) (acrylate d'alkyle en C2-C8) sont mis à réagir par l'intermédiaire d'un amorceur, puis les 5 à 60 % en poids restants du composant (B11) et de l'agent de réticulation cyclique (B12) sont ajoutés.

5. Procédé de fabrication d'un mélange à mouler thermoplastique selon l'une des revendications 1 à 4, dans lequel l'addition d'un mélange de monomères de B11 et B12, pour la fabrication de B1, s'effectue en au moins trois segments temporels.

6. Procédé de fabrication d'un mélange à mouler thermoplastique selon l'une des revendications 1 à 5, **caractérisé en ce que** le laps de temps correspondant à chacune des additions segmentées est compris dans la plage de 20 à 60 min, en particulier de 20 à 40 min.

7. Procédé de fabrication d'un mélange à mouler thermoplastique selon l'une des revendications 1 à 6, **caractérisé en ce qu'**on utilise en tant qu'agent de réticulation, en tant que composant B12, de l'acrylate de dicyclopentadiényle (DCPA) en une quantité de 1 à 2 % en poids par rapport au composant B1.

8. Procédé de fabrication d'un mélange à mouler thermoplastique selon l'une des revendications 1 à 7, **caractérisé en ce que** le composant A est un copolymère de styrène (A11) et d'acrylonitrile (A12), qui présente une masse moléculaire Mw comprise dans la plage de 20 000 à 300 000 g/mol.

9. Procédé de fabrication d'un mélange à mouler thermoplastique selon l'une des revendications 1 à 8, **caractérisé en ce que** les composants A et B sont mélangés à 0,5 à 5 % en poids d'adjuvants et/ou d'additifs supplémentaires C.

10. Mélange à mouler thermoplastique, fabriqué par un procédé selon l'une des revendications 1 à 9.

11. Utilisation du mélange à mouler thermoplastique obtenu par un procédé selon l'une des revendications 1 à 9 pour la fabrication d'objets moulés, de feuilles, de fibres ou de revêtements.

12. Objets moulés, feuilles, fibres ou revêtements, qui sont fabriqués à partir d'un mélange à mouler obtenu par un procédé selon l'une des revendications 1 à 9.
